# EUROPEAN PATENT APPLICATION

(11) **EP 3 883 046 A1**
(43) Date of publication of application: **22.09.2021**
(21) Application number: 20194803.1
(22) Date of filing: 07.09.2020
(51) Int. Cl.: H01M 50/276, H01M 50/287, H01M 50/342, H01M 50/358, H01M 50/367

(54) **BATTERY MODULE AND SAFETY STRUCTURE THEREOF**

(30) Priority: 20.03.2020 CN 202020362225 U
(71) Applicant: CHINA LITHIUM BATTERY TECHNOLOGY CO., LIMITED, Henan Province (CN)
(72) Inventor: LI, Zhouli, Luoyang City,, Henan Province (CN); LI, Huanfei, Luoyang City,, Henan Province (CN); SUN, Guohua, Luoyang City,, Henan Province (CN); CHANG, Lihui, Luoyang City,, Henan Province (CN); NIU, Li, Luoyang City,, Henan Province (CN); DU, Xiaoyuan, Luoyang City,, Henan Province (CN)
(74) Representative: Becker, Eberhard

(57) **Abstract**

The disclosure is related the technical field of battery packaging, discloses a safety structure of the battery module and a battery module. A safety structure of a battery module includes: a guiding channel, one end of the guiding channel connects the safety valve of the battery cell, and the other end of the guiding channel connects the packaging housing of the battery module; a pressure releasing mechanism for discharging high-pressure fluid is provided at a position corresponding to the guiding channel on the packaging housing; and the guiding channel is provided corresponding to the safety valve. By using the safety structure, it is possible to solve the problem that, due to the lack a battery module-level guiding channel in current battery pack, a thermal runaway chain reaction occurs when the energy of a single cell is diffused caused by thermal runaway, thus improving security of battery.

## Description

### BACKGROUND

### Field of the Disclosure

The disclosure relates to the technical field of battery packaging, in particular to a safety structure of a battery module and a battery module.

### Description of Related Art

Currently, when thermal runaway occurs to a power lithium-ion battery, a large amount of high-temperature and high-pressure gas will be generated inside the battery. In order to avoid the gas from accumulating in the battery and causing accidents such as leakage or explosion, the gas is generally discharged through a safety valve. In the meantime, tests show that the design of the module-level exhaust diversion structure will have a critical impact on the inhibition results on diffusion of thermal runaway.

### SUMMARY OF THE DISCLOSURE

The disclosure discloses a safety structure of a battery module and a battery module, which are used to solve the problem that, due to the lack a battery module-level guiding channel in current battery module or pack, a thermal runaway chain reaction occurs when the energy of a single cell is diffused caused by thermal runaway.

In order to achieve the above purpose, the disclosure provides the following technical solutions.

A safety structure of a battery module including:
A packaging housing, wherein at least one battery cell is disposed in the packaging housing;
A guiding channel, one end of the guiding channel connects the safety valve of the battery cell, and the other end of the guiding channel connects a pressure releasing mechanism;
Specifically, the pressure releasing mechanism is configured for discharging thermal runaway heat flow directly from the safety valve of the battery cell to outside of the packaging housing;
The safety structure of the battery module provided by the disclosure is provided with an independent guiding channel between the safety valve and the packaging housing, and a pressure releasing mechanism is provided at a corresponding position on the packaging housing. When a single battery cell encounters the thermal runaway problem, the thermal runaway heat flow can be discharged directly from the safety valve to the outside of the packaging housing, thereby preventing the heat flow discharged from one of the battery cells to damage other battery cells and thus avoiding thermal runaway chain reaction.

The safety structure provided by the disclosure can effectively solve the thermal runaway diversion problem of module-level battery cells, improve the directivity and stability of the gas exhaust guiding channel, thereby protecting the harness panel from being damaged and thereby preventing other battery cells and modules from short circuit or fire. In this manner, it is possible to enhance the inhibition ability for thermal runaway diffusion in the battery cell module to improve application security of power batteries.

A battery module includes a plurality of battery cells and a packaging housing for packaging the battery cells. The safety structure described above is provided between the battery cell and the package.

The battery module provided by the disclosure, with the configuration of the safety structure provided above, can effectively solve the thermal runaway diversion problem of module-level battery cells, improve the directivity and stability of the gas exhaust guiding channel, thereby protecting the harness panel from being damaged and thereby preventing other battery cells and modules from short circuit or fire. In this manner, it is possible to enhance the inhibition ability for thermal runaway diffusion in the battery cell module to improve application security of power batteries.

### BRIEF DESCRIPTION OF THE DRAWINGS

For a better understanding of the disclosure, reference may be made to exemplary embodiments shown in the following drawings. The components in the drawings are not necessarily to scale and related elements may be omitted, or in some instances proportions may have been exaggerated, so as to emphasize and clearly illustrate the features described herein. In addition, related elements or components can be variously arranged, as known in the art. Further, in the drawings, like reference numerals designate same or like parts throughout the several views.
FIG. 1 is a schematic structural view of a battery module safety structure according to an embodiment of the disclosure.
FIG. 2 is a schematic cross-sectional view of the structure shown in FIG. 1.
FIG. 3 is an enlarged schematic view of the structure shown at A in FIG. 2.
FIG. 4 is a schematic view of the structure of the wire harness plate in the structure shown in FIG. 1.
FIG. 5 is a schematic structural view of a pressure releasing groove according to an embodiment of the disclosure.
FIG. 6 is a schematic view of an explosion structure of a battery module according to an embodiment of the disclosure.

### DESCRIPTION OF EMBODIMENTS

The technical solutions in the exemplary embodiments of the disclosure will be described clearly and explicitly in conjunction with the drawings in the exemplary embodiments of the disclosure. The description proposed herein is just the exemplary embodiments for the purpose of illustrations only, not intended to limit the scope of the disclosure, so it should be understood that and various modifications and variations could be made thereto without departing from the scope of the disclosure.

In the description of the present disclosure, unless otherwise specifically defined and limited, the terms "first", "second" and the like are only used for illustrative purposes and are not to be construed as expressing or implying a relative importance. The term "plurality" is two or more. The term "and/or" includes any and all combinations of one or more of the associated listed items.

In particular, a reference to "the" object or "a" and "an" object is intended to denote also one of a possible plurality of such objects. Unless otherwise defined or described, the terms "connect", "fix" should be broadly interpreted, for example, the term "connect" can be "fixedly connect", "detachably connect", "integrally connect", "electrically connect" or "signal connect". The term "connect" also can be "directly connect" or "indirectly connect via a medium". For the persons skilled in the art, the specific meanings of the abovementioned terms in the present disclosure can be understood according to the specific situation.

Further, in the description of the present disclosure, it should be understood that spatially relative terms, such as "above", "below" "inside", "outside" and the like, are described based on orientations illustrated in the figures, but are not intended to limit the exemplary embodiments of the present disclosure.

In the context, it should also be understood that when an element or features is provided "outside" or "inside" of another element(s), it can be directly provided "outside" or "inside" of the other element, or be indirectly provided "outside" or "inside" of the another element(s) by an intermediate element.

Currently, there is a lack of module-level thermal runaway exhaust diversion design in most battery modules. Take the square aluminum battery module used in the market as an example, the main defects of the battery module are as follows.

Although there is a safety valve on the outer box of the battery module, there is no exhaust channel set separately from a single battery cell between the safety valve of battery cell and the safety valve of outer box in the battery module. The upper cover plate, FPC, wire harness plate and other components above the safety valve of battery cell hinder the thermal runaway energy of the single battery (that is, the cell) from releasing out of the module. After the energy is blocked, the energy is diffused inside the battery module. Too much thermal runaway energy will flow to adjacent cells, exacerbating the damage to adjacent cells and other cells within the battery module, resulting in chain reactions of the thermal runaway diffusion.

In order to prevent the thermal runaway from occurring to batteries, the existing battery pack is usually provided with a safety valve on the packaging housing. When thermal runaway occurs to the battery pack, the heat flow (usually refers to the high-temperature and high-pressure gas, liquid, solid and fluid) can flow from the safety valve of the battery pack, thereby preventing the risk of explosion. However, when one of the battery cells is malfunctioned and causes thermal runaway, the heat flow from the battery cell will flow through other battery cells and increase the risk of thermal runaway of the other battery cells.

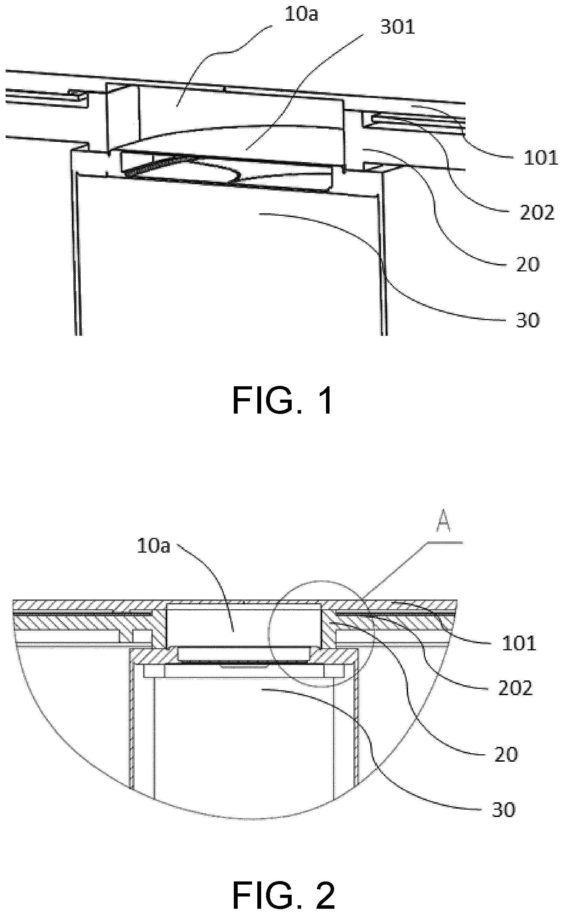

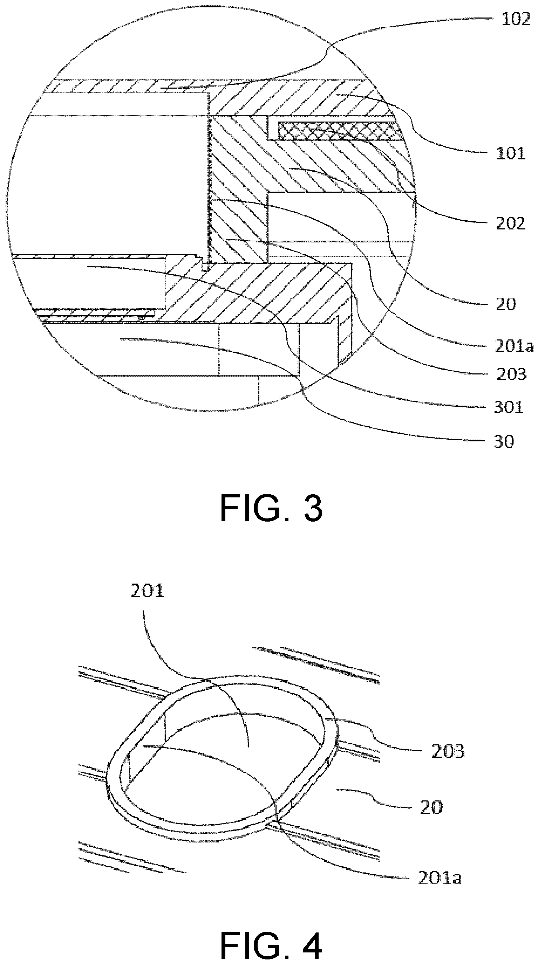

When thermal runaway occurs to one of the battery cells, in order to prevent thermal runaway chain reaction from occurring to the other battery cells, an embodiment of the disclosure provide a safety structure of a battery module as shown in FIG. 1 to FIG. 5, including:
A guiding channel 10a, one end of the guiding channel 10a connects the safety valve 301 of battery cell, and the other end of the guiding channel 10a connects the packaging housing of the battery module;
A pressure releasing mechanism for discharging high-pressure fluid is provided at a position corresponding to the guiding channel 10a on the packaging housing;
Specifically, the guiding channel 10a is configured corresponding to the safety valve 301 of battery cell.

In the safety structure of the battery module in the embodiment, a guiding channel 10a is provided between the safety valve 301 of any battery cell 30 and the packaging housing, and the guiding channels 10a between the safety valve 301 of different battery cells 30 and the packaging housing are independent of each other while not communicating with each other. Moreover, a pressure releasing mechanism is provided at a corresponding position on the packaging housing, and the pressure releasing mechanism and the guiding channels 10a also correspond to each other in a one-to-one manner. When thermal runaway problem occurs to a single battery cell 30, the thermal runaway heat flow can be directly discharged from the safety valve 301 of the single battery cell 30 to the outside of the packaging housing, thereby preventing the heat flow discharged from one of the battery cells 30 from damaging the other battery cells, thus avoiding the thermal runaway chain reaction.

The safety structure provided by the disclosure can effectively solve the thermal runaway diversion problem of module-level battery cells 30, improve the directivity and stability of the gas exhaust guiding channel 10a, thereby protecting the wire harness plate 20 from being damaged and thereby preventing other battery cells 30 and modules from short circuit or fire. In this manner, it is possible to enhance the inhibition ability for thermal runaway diffusion in the battery cell module to improve application security of power batteries.

It can be understood that the diameter of the guiding channel 10a in the disclosure should be larger than the safety valve 301 to prevent the heat flow from dissipating. In this structure, the heat flow flowing out of the battery cell 30 flows through the guiding channel 10a and is discharged to the corresponding pressure releasing mechanism on the packaging housing, and is discharged to the outside of the packaging housing after passing through the pressure releasing mechanism. Specifically, the pressure releasing mechanism can be set in a variety of forms, either in the form of an opening directly or a closure. When the heat flow pressure in the guiding channel 10a reaches a certain level of pressure, the pressure releasing mechanism can be opened to allow the heat flow to flow out of the pressure releasing mechanism. In order to make the packaging housing to serve the packaging function, the pressure releasing mechanism is in a closed state when in a non-operating state, that is, the state of not guiding the flow, so as to achieve the sealing effect to avoid dust. When thermal runaway occurs, the pressure releasing mechanism is in an operating state. Under the circumstances, the pressure releasing mechanism communicates with the outside to achieve the diversion effect.

In addition, in the embodiment, the packaging housing may be a cover plate 101 for packaging the wire harness plate 20 in the battery module, or may be a box for packaging the battery module. When the packaging housing is a box packaging a battery module, a pressure releasing mechanism may be directly provided on the box at a position corresponding to the safety valve 301 of battery cell, and a guiding channel 10a is formed between the safety valve 301 of battery cell and the pressure releasing mechanism, such that the heat flow discharged from the safety valve 301 of battery cell is directly discharged to the corresponding pressure releasing mechanism on the box, and is discharged outward by the pressure releasing mechanism. When the packaging housing is the cover plate 101 for packaging the wire harness plate 20, the heat flow in the safety valve 301 of battery cell can be directed to the cover plate 101 through the guiding channel 10a and led out by the pressure releasing mechanism on the cover plate 101.

In this embodiment, there are a plurality of guiding channels 10a, the guiding channels 10a are provided corresponding to the safety valve 301 of battery cell in a one-to-one manner, and the plurality of guiding channels 10a are arranged at intervals.

Specifically, the battery module safety structure in this embodiment includes:
A plurality of guiding channels 10a, one end of any one of the guiding channels 10a connects the safety valve 301 of battery cell, and the other end of the guiding channel 10a connects the packaging housing of the battery module;
A pressure releasing mechanism for discharging high-pressure fluid is provided at a position corresponding to any of the guiding channels 10a on the packaging housing;
Specifically, the guiding channel 10a and the safety valve 301 of battery cell are provided corresponding to each other in a one-to-one manner, and the plurality of guiding channels 10a are arranged at intervals.

Specifically, the guiding channel 10a can be formed in various forms. For example, the structure of the battery module itself can be used to realize the guiding channel 10a in the form of connection of different components as well as slots and openings, or may form the guiding channel 10a through the configuration of a flow guide member alone. For the ease of design, in the safety structure of the battery module of this embodiment, a flow guide member is provided between any of the safety valves 301 of battery cell and the packaging housing, and the flow guide member is provided with a flow guide hole. The diversion hole forms a guiding channel 10a connecting the safety valve 301 of battery cell and the packaging housing, wherein the inner diameter of the diversion hole is larger than the outer diameter of the safety valve 301 of battery cell, so that all the heat flow from the safety valve 301 of battery cell can be covered in the range of the diversion hole to avoid leakage. When designing the flow guide member, the wall thickness of the diversion hole can be appropriately increased to increase the pressure-withstanding strength and fire resistance.

Referring to FIG. 1 to FIG. 4, in this embodiment, the packaging housing is a cover plate 101 for packaging the wire harness plate 20, and a wire harness plate 20 is provided between the battery cell 30 of the battery module and the cover plate 101. An escape hole 201 is provided at position on the wire harness plate 20 corresponding to the safety valve 301 of battery cell, and the inner wall 201a of the escape hole is extended toward the direction of the safety valve 301 of battery cell and/or toward the direction of the cover plate 101, thereby forming the diversion hole.

Specifically, in the structure shown in FIG. 1 to FIG. 3, the packaging housing is a cover plate 101, and a wire harness plate 20 is provided between the cover plate 101 and the battery cell 30, and a collection circuit board 202 for measuring temperature and voltage is disposed or installed on the wire harness plate 20. Specifically, the temperature and voltage collection line adopts a glass fiber high-temperature resistant collection line to monitor the voltage and temperature data of the battery cell 30 and the module in real time. As can be seen from FIG. 1, the wire harness plate 20 is provided on the surface of the battery cell 30, and an escape hole 201 is provided on the wire harness plate 20 corresponding to the safety valve 301 of battery cell. The inner wall 201a of the escape hole 201 extends toward the safety valve 301 of battery cell and the direction of the cover plate 101 simultaneously, thereby forming a sectional "T"-shaped structure. An annular convex boss 203 is formed respectively on the upper surface and lower surface of the escape hole 201, and the annular convex boss 203 at the upper part is in contact with the surface of the cover plate 101. The annular convex boss 203 at the lower part is in contact with the surface of the battery cell 30 around the safety valve 301 of battery cell, and the inner diameter of the lower annular convex boss 203 is larger than the outer diameter of the safety valve 301 of battery cell, and an encircling region of the battery cell 30 includes the region of the safety valve 301 of battery cell, such that the encircling of the inner wall 201a of the escape hole 201 forms the guiding channel 10a. Specifically, the wall thickness of the annular convex boss can be increased as appropriate to increase pressure-withstanding strength and fire-resistance performance.

In another embodiment of the disclosure, the packaging housing is a cover plate 101 for packaging the wire harness plate 20, and a wire harness plate 20 is provided between the battery cell 30 of the battery module and the cover plate 101. An escape hole 201 is provided at a position corresponding to the safety valve 301 of battery cell on the wire harness plate 20. An annular flange, which extends from the cover plate 101 to the safety valve of battery cell 301, is provided on the cover plate 101 corresponding to the escape hole 201. The annular flange passes through the escape hole 201 and connects the battery cell 30, and the inner wall of the annular flange forms the diversion hole.

In the above embodiment, the flow guide member is an annular flange formed on the cover plate 101, the free end of the annular flange connects the surface of the battery cell 30 near the safety valve 301 of battery cell, and the middle of the annular flange is a diversion hole. The inner diameter of the annular flange is larger than the outer diameter of the safety valve 301 of battery cell, so that the surrounding region of the annular flange on the battery cell 30 is larger than the region of the safety valve 301 of battery cell to achieve flow guidance. Specifically, the wall thickness of the annular flange can be increased as appropriate to increase the pressure-withstanding strength and fire-resistance performance.

In an embodiment of the disclosure, the inner wall of the diversion hole is coated or plated with a metal coating, which can improve the high-temperature resistance performance of the diversion flow. The high-temperature and high-pressure heat flow generated when thermal runaway occurs to the battery cell usually reaches high temperature and may melt the inner wall of the diversion hole, thus causing damage to the flow guide member. In this embodiment, a high-temperature resistant metal coating, such as an aluminum layer, is provided on the inner wall of the diversion hole, such that the melting or burning of the channel may be prevented effectively when the high-temperature and high-pressure gas (or fluid) is discharged, thereby ensuring continuous directional diversion and discharging of gas.

In the meantime, in an embodiment of the disclosure, the surface of the packaging housing facing and/or facing away from the safety valve of battery cell is coated with or plated with a metal coating, which can avoid the heat flow being ejected from the pressure releasing mechanism and therefore burns the packaging housing. By providing a high-temperature resistant metal coating, such as an aluminum layer, on the surface of the packaging housing, it is possible to effectively prevent the packaging housing from melting or burning when the high-temperature and high-pressure gas (or fluid) is discharged.

In an embodiment of the disclosure, the wire harness plate 20, the cover plate 101 and the guide flow member are made of nonflammable materials, which can further improve the overall safety performance of the battery module. For example, the mica sheet is molded at one time to ensure the high-temperature resistance and non-combustibility of the overall battery module. Specifically, the cover plate 101 is a mica sheet cover plate 101.

When the pressure releasing mechanism is provided, the thickness of the packaging housing at the pressure releasing mechanism may be smaller than the thickness of the packaging housing in the non-pressure releasing region. Specifically, the non-pressure releasing region refers to a portion of the packaging housing not correspond to the guiding channel. In this embodiment, the packaging housing with respect to the pressure releasing mechanism is subjected to a thinning process, so that the packaging housing at this part can be easily broken. The pressure releasing mechanism may also be a pressure releasing hole, for example. In addition, the pressure releasing mechanism can also be a safety valve installed on the packaging housing.

In addition, in an embodiment of the disclosure, a weak groove is provided on the packaging housing at the pressure releasing mechanism, which can reduce the pressure withstanding strength of the pressure releasing mechanism and facilitate the discharge of heat flow when thermal runaway occurs.

In addition, in an embodiment of the disclosure, the pressure releasing mechanism is fixedly connected to the packaging housing.

In an embodiment of the disclosure, the pressure releasing mechanism is provided as a pressure releasing groove opened on the packaging housing, which ensures the sealing performance of the packaging housing under normal use. The pressure releasing groove may be provided on one side contacting the guiding channel or on the side facing away from the guiding channel.

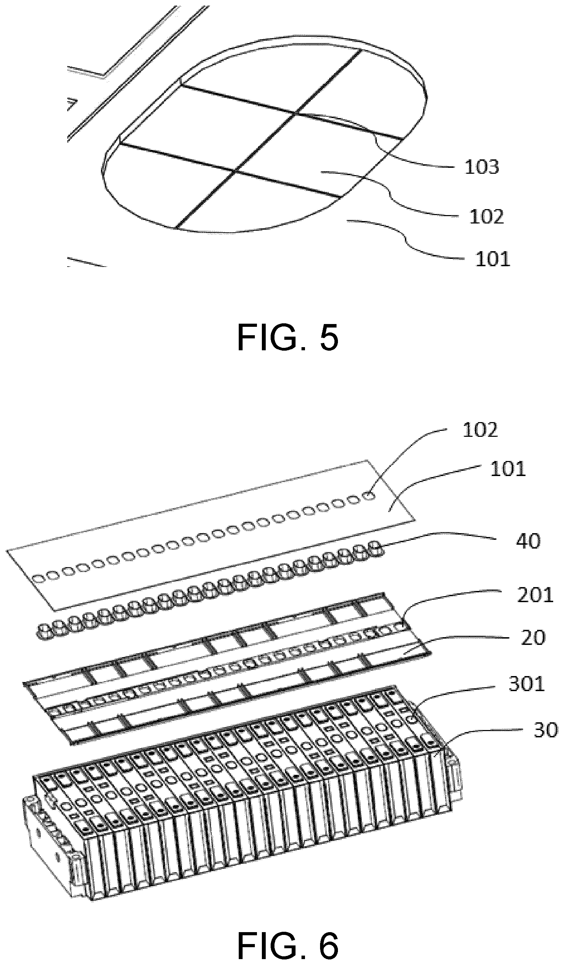

FIG. 5 is a schematic structural view of a pressure releasing mechanism according to an embodiment of the disclosure. As can be seen from FIG. 5, the pressure releasing mechanism is a pressure releasing groove 102 opened on the packaging housing, which is a recess structure. The structural shape of the pressure releasing groove 102 may be similar to the structure of the safety valve 301 of battery cell, but its structural size is larger than that of the safety valve 301 of battery cell, so as to facilitate discharging the heat flow and flame. The configuration position of the pressure releasing groove can be provided with an adhesive flame retardant tape to prevent condensation. In actual circumstances, when configuring the recess, the thickness of the pressure releasing region with respect to the panel is subjected to a thinning process, thereby forming a pressure releasing groove 102 to facilitate releasing pressure.

In addition, in the structure shown in FIG. 5, a weak groove 103 is provided at the bottom of the pressure releasing groove. The weak groove 103 is, for example, a linear-shaped groove, a cross-shaped groove, a "rectangle donut" shaped groove (a groove having a hollow rectangular structure), a hollow-shaped groove or a circular groove that is processed through etching or machine milling. The configuration of the weak groove 103 may reduce the pressure-withstanding capability of the pressure releasing groove 102 so as to be easily broken, thereby ensuring that the pressure releasing mechanism can be opened normally when thermal runaway occurs.

FIG. 6 is a schematic view of an explosion structure of a battery module according to an embodiment of the disclosure. In this embodiment, the flow guide member 40 is a flow guide cylinder disposed independently. Specifically, the battery module includes a plurality of battery cells 30 arranged side by side, each battery cell 30 is provided with a safety valve 301 of battery cell, a wire harness plate 20 is provided above the battery cell 30, and a cover plate 101 is provided above the wire harness plate 20. Specifically, an escape hole 201 is provided at a position corresponding to each safety valve 301 on the wire harness plate 20. The escape hole 201 is configured to assemble the flow guide cylinder, and both ends of the flow guide cylinder respectively connect the cover plate 101 and the battery cell 30. Moreover, the encircling region of the diversion hole in the middle of the flow guide cylinder on the battery cell 30 is larger than the size of the safety valve 301 of battery cell. The region corresponding to each flow guide cylinder on the cover plate 101 is provided with a pressure releasing groove 102, and the bottom plate of the pressure releasing groove 102 is provided with the weak groove 103.

On the other hand, the disclosure provides an embodiment of a battery module, which includes a plurality of battery cells and a packaging housing for packaging the battery cells, and the safety structure mentioned above is provided between the battery cells and the package.

The battery module has independent guiding channels relative to each battery cell, thereby effectively controlling discharge of the high-temperature heat flow and the combustion flame through the guiding channel. In this manner, when thermal runaway occurs to a single battery cell of the battery module, it is possible to prevent continuous combustion caused by heat radiation of combustion flame or combustion of wire harness plate and cover plate and avoid heat spread. In addition, the wire harness plate in the battery module can be equipped with a collection circuit board, and adopt a glass fiber non-combustible collection circuit to ensure that the voltage and collection function are still normal during thermal runaway, thereby achieving continuous monitoring of thermal runaway as well as temperature and voltage data of thermal diffusion, so as to effectively determine and perform early warning of thermal runaway and allow sufficient time for the crew to escape.

Other embodiments of the disclosure will be apparent to those skilled in the art from consideration of the specification and practice of the disclosure disclosed herein. The disclosure is intended to cover any variations, uses or adaptations of the disclosure. These variations, uses, or adaptations follow the general principles of the disclosure and include common general knowledge or conventional technical means in the art that are not disclosed in the present disclosure.

## Claims

1. A safety structure of a battery module, comprising:
a packaging housing, wherein at least one battery cell (30) is disposed in the packaging housing; and
a guiding channel (10a), one end of the guiding channel (10a) connecting a safety valve (301) of the battery cell (30), and the other end of the guiding channel (10a) connecting a pressure releasing mechanism;
wherein the pressure releasing mechanism is configured for discharging thermal runaway heat flow directly from the safety valve (301) of the battery cell (30) to outside of the packaging housing.

2. The safety structure of the battery module according to claim 1, wherein the guiding channel (10a) and the safety valve (301) are each provided in plural, the guiding channels (10a) are provided corresponding to the safety valve (301) in a one-to-one manner, and the guiding channels (10a) are spaced apart by intervals.

3. The safety structure of the battery module according to claim 1, wherein a flow guide member (40) is provided between the safety valve (301) and the packaging housing, and the flow guide member (40) is provided with a diversion hole, the diversion hole forms the guiding channel (10a) connecting the safety valve (301) and the packaging housing.

4. The safety structure of the battery module according to claim 3, wherein the packaging housing is a cover plate (101) for packaging a wire harness plate (20), and the wire harness plate (20) is provided between a battery cell (30) of the battery module and the cover plate (101), an escape hole (201) is provided at a position corresponding to the safety valve (301) on the wire harness plate (20), an inner wall of the escape hole (201a) extends in a direction of the safety valve (301) and/or a direction of the cover plate (101), thereby forming the diversion hole.

5. The safety structure of the battery module according to claim 3, wherein the packaging housing is a cover plate (101) for packaging a wire harness plate (20), and the wire harness plate (20) is provided between a battery cell (30) of the battery module and the cover plate (101), an escape hole (201) is provided at a position corresponding to the safety valve (301) on the wire harness plate (20), an annular flange, which extends from the cover plate (101) to the safety valve (301), is provided on the cover plate (101) corresponding to the escape hole (201), the annular flange passes through the escape hole (201) and connects the battery cell (30), and an inner wall of the annular flange forms the diversion hole.

6. The safety structure of the battery module according to claim 4 or 5, wherein the cover plate (101) is a mica sheet cover plate.

7. The safety structure of the battery module according to any of claims 1-5, wherein a surface of the packaging housing facing and/or facing away from the safety valve (301) is coated with or plated with a metal coating.

8. The safety structure of the battery module according to any of claims 3-5, wherein an inner wall of the diversion hole is coated with or plated with a metal coating.

9. The safety structure of the battery module according to any of claims 1-5, wherein the pressure releasing mechanism is integrated with the packaging housing, a thickness of the packaging housing at the pressure releasing mechanism is smaller than a thickness of the packaging housing in a non-pressure releasing region; or the pressure releasing mechanism is a pressure releasing hole.

10. The safety structure of the battery module according to claim 9, wherein a weak groove (103) is provided on the packaging housing of the pressure releasing mechanism.

11. The safety structure of the battery module according to claim 1, wherein the pressure releasing mechanism is fixedly connected to the packaging housing.

12. A battery module, comprising a plurality of battery cells (30) and a packaging housing for packaging the battery cells (30), wherein the safety structure claimed in any of claims 1-10 is provided between the battery cells (30) and the packaging housing.
